# EUROPEAN PATENT APPLICATION

(11) **EP 4 261 640 A1**
(43) Date of publication of application: **18.10.2023**
(21) Application number: 21902980.8
(22) Date of filing: 04.10.2021
(51) Int. Cl.: G05B 23/02

(54) **ANOMALY DETERMINATION MODEL GENERATION DEVICE, ANOMALY DETERMINATION DEVICE, ANOMALY DETERMINATION MODEL GENERATION METHOD, AND ANOMALY DETERMINATION METHOD**

(30) Priority: 08.12.2020 JP 2020203427
(71) Applicant: JFE Steel Corporation, Tokyo 100-0011 (JP)
(72) Inventor: HIRATA, Takehide, Tokyo 100-0011 (JP); SHOMURA, Kei, Tokyo 100-0011 (JP)
(74) Representative: Hoffmann Eitle
(86) International application number: PCT/JP2021/036627
(87) International publication number: WO 2022/123876

(57) **Abstract**

An abnormality determination model generating device generates a first abnormality determination model by calculating an average and a variance of each of variables in a case where a maximum value of a correlation between the variables is less than a predetermined value for K L-dimensional vectors in an L-dimensional variable space, generates a second abnormality determination model by performing principal component analysis and calculating a transformation coefficient of a principal component in a case where the maximum value of the correlation between the variables is greater than or equal to a predetermined value, and configures an M-dimensional vector including M types of variables at the same time and generates a third abnormality determination model by performing principal component analysis on a plurality of M-dimensional vectors and calculating a transformation coefficient of a principal component in a case where time-series signals during normal operation have M types (M ≥ 2).

## Description

### Field

The present invention relates to an abnormality determination model generating device, an abnormality determination device, an abnormality determination model generating method, and an abnormality determination method. Background

In the state monitoring of plant facilities, generally, an abnormality of the plant facilities is determined by setting appropriate upper and lower limits to signal data obtained from the plant facilities. However, in a case where some specific devices such as valves are set as monitoring targets, state monitoring is performed by extracting a feature amount corresponding to a characteristic of the device.

However, in a plant configured by combining a plurality of element devices (facilities) in order to execute one purpose, for example, in a manufacturing plant of a steel product, there are cases where the state monitoring as described above is insufficient. For example, in such plants, each facility often performs the same operation repeatedly. Therefore, it is necessary to monitor operation patterns by extracting feature amounts such as a change rate, a maximum value, a minimum value, and a time required for setting of signal data from each operation pattern and managing the extracted feature amounts. In addition, for a facility having a constant operation pattern, there are cases where the operation pattern is monitored by a user manually setting upper and lower limits to the operation pattern itself instead of extracting feature amounts, thereby determining an abnormality (for example, see Patent Literature 1).

On the other hand, as an approach from another viewpoint, a state monitoring method using multivariate analysis is also known. For example, there is known a method in which a principal component analysis is performed on a plurality of process amounts collected from plant facilities to be monitored, and the process amount is converted into a small number of feature amounts representing major changes thereof (see, for example,

### Patent Literature 2).

### Citation List

### Patent Literature

Patent Literature 1: JP H10-6028 A
Patent Literature 2: JP 2001-75642 A

### Summary

### Technical Problem

However, the technique of setting upper and lower limits for signal data obtained from a monitoring target as described above and the technique of setting the upper and lower limits for an operation pattern as in Patent Literature 1 have the following problems. That is, in a case where a plant includes a plurality of facilities, there is a problem that manpower and cost increase since it is necessary to individually set upper and lower limits for each of the plurality of facilities. On the other hand, in the technique of Patent Literature 2, since information in the time direction cannot be utilized, the accuracy of abnormality determination may be deteriorated in the state monitoring of a facility having an operation pattern.

The present invention has been made in view of the above, and an object of the present invention is to provide an abnormality determination model generating device, an abnormality determination device, an abnormality determination model generating method, and an abnormality determination method that can be generally applied without regard to the type or the like of a monitoring target and can perform highly accurate abnormality determination. Solution to Problem

To solve the above-described problem and achieve the object, an abnormality determination model generating device according to the present invention for generating an abnormality determination model for determining an abnormality of a facility performing a predetermined operation includes: a time-series signal clipping unit configured to clip K times from one or more time-series signals indicating an operation state of the facility during normal operation of the facility; and an abnormality determination model generating unit configured to generate the abnormality determination model from the time-series signals during the normal operation clipped out by the time-series signal clipping unit, wherein the abnormality determination model generating unit is configured to: clip L items per one time of clipping from the time-series signals during the normal operation clipped by the time-series signal clipping unit and configures an L-dimensional vector including L variables; generate a first abnormality determination model by calculating an average and a variance of each of the variables in a case where a maximum value of a correlation between variables is less than a predetermined value for K L-dimensional vectors in an L-dimensional variable space; generate a second abnormality determination model by performing principal component analysis and calculating a transformation coefficient of a principal component in a case where the maximum value of the correlation between the variables is greater than or equal to a predetermined value for the K L-dimensional vectors in the L-dimensional variable space; and configure an M-dimensional vector including M types of variables at a same time and generate a third abnormality determination model by performing principal component analysis on a plurality of M-dimensional vectors in an M-dimensional variable space and calculating a transformation coefficient of a principal component in a case where the time-series signal during the normal operation clipped out by the time-series signal clipping unit has M types (M ≥ 2).

Moreover, in the above-described abnormality determination model generating device according to the present invention, the first abnormality determination model and the second abnormality determination model are abnormality determination models generated in a case where a time-series signal of the L-dimensional vector clipped out by the time-series signal clipping unit consists of signals indicating same operation, and the third abnormality determination model is an abnormality determination model generated in a case where the time-series signal of the L-dimensional vector clipped out by the time-series signal clipping unit does not consist of signals indicating same operation and there are two or more types (M types) of signals.

Moreover, the above-described abnormality determination model generating device according to the present invention further includes: a time-series signal collecting unit configured to collect a time-series signal indicating an operation state of the facility and a time-series signal as a trigger candidate for determining a condition for clipping the time-series signal indicating the operation state from a predetermined monitoring target section; and a trigger condition determination model generating unit configured to identify in advance a start time of the monitoring target section to be clipped out with respect to the time-series signal indicating the operation state of the facility, generate label data for turning on a label of the start time and turning off at other times, and generate a trigger condition determination model by machine learning, the trigger condition determination model using each value of one or more of the time-series signal as the trigger candidate at each time as input and the label data at each time as output, and wherein the time-series signal clipping unit is configured to clip K times from the one or more of the time-series signal indicating the operation state of the facility based on the trigger condition determination model during normal operation of the facility.

Moreover, in the above-described abnormality determination model generating device according to the present invention, the trigger condition determination model is a machine learning model including a decision tree.

To solve the above-described problem and achieve the object, an abnormality determination device according to the present invention for determining an abnormality of a facility performing a predetermined operation includes: a time-series signal clipping unit configured to clip out a time-series signal for abnormality determination from one or more time-series signals indicating an operation state of the facility; and an abnormality determination unit configured to determine an abnormality of the facility from the time-series signal for the abnormality determination using any one of the first abnormality determination model, the second abnormality determination model, and the third abnormality determination model generated by the abnormality determination model generating device.

To solve the above-described problem and achieve the object, an abnormality determination device according to the present invention for determining an abnormality of a facility performing a predetermined operation includes: a time-series signal collecting unit configured to collect a time-series signal indicating an operation state of the facility and a time-series signal as a trigger candidate for determining a condition for clipping the time-series signal indicating the operation state from a predetermined monitoring target section; a time-series signal clipping unit configured to clip a time-series signal for abnormality determination by inputting a value of each time of the time-series signal as the trigger candidate to the trigger condition determination model generated by the abnormality determination model generating device according to claim 3 or 4 and clipping out L pieces of data for one or more of the time-series signal indicating the operation state of the facility in a predetermined period starting from a time point when output of the trigger determination model is turned on; and an abnormality determination unit configured to determine an abnormality of the facility from the time-series signal for the abnormality determination using any one of the first abnormality determination model, the second abnormality determination model, and the third abnormality determination model generated by the abnormality determination model generating device.

Moreover, in the above-described abnormality determination device according to the present invention, the abnormality determination unit is configured to determine necessity of repair of the facility based on number of times the facility has been determined to be abnormal in a predetermined period.

To solve the above-described problem and achieve the object, an abnormality determination model generating method according to the present invention for generating an abnormality determination model for determining an abnormality of a facility performing a predetermined operation includes: a time-series signal clipping step of clipping K times from one or more time-series signals indicating an operation state of the facility during normal operation of the facility; and an abnormality determination model generating step of generating the abnormality determination model from the time-series signals during the normal operation clipped out in the time-series signal clipping step, wherein the abnormality determination model generating step includes: clipping L items per one time of clipping from the time-series signals during the normal operation clipped in the time-series signal clipping step and configuring an L-dimensional vector including L variables; generating a first abnormality determination model by calculating an average and a variance of each of the variables in a case where a maximum value of a correlation between variables is less than a predetermined value for K L-dimensional vectors in an L-dimensional variable space; generating a second abnormality determination model by performing principal component analysis and calculating a transformation coefficient of a principal component in a case where the maximum value of the correlation between the variables is greater than or equal to a predetermined value for the K L-dimensional vectors in the L-dimensional variable space; and configuring an M-dimensional vector including M types of variables at a same time and generating a third abnormality determination model by performing principal component analysis on a plurality of M-dimensional vectors in an M-dimensional variable space and calculating a transformation coefficient of a principal component in a case where the time-series signal during the normal operation clipped out by the time-series signal clipping unit has M types (M ≥ 2) .

To solve the above-described problem and achieve the object, in the abnormality determination model generating method according to the present invention, the first abnormality determination model and the second abnormality determination model are abnormality determination models generated in a case where a time-series signal of the L-dimensional vector clipped out in the time-series signal clipping step consists of signals indicating same operation, and the third abnormality determination model is an abnormality determination model generated in a case where the time-series signal of the L-dimensional vector clipped out in the time-series signal clipping step does not consist of signals indicating same operation and there are two or more types (M types) of signals.

To solve the above-described problem and achieve the object, an abnormality determination method according to the present invention for determining an abnormality of a facility that performs predetermined operation includes: a time-series signal clipping step of clipping out a time-series signal for abnormality determination from one or more time-series signals indicating an operation state of the facility; and an abnormality determination step of determining an abnormality of the facility from the time-series signal for the abnormality determination using any one of the first abnormality determination model, the second abnormality determination model, and the third abnormality determination model generated by the abnormality determination model generating method. Advantageous Effects of Invention

According to the present invention, it is possible to apply generally without regard to the type or the like of a monitoring target and to perform abnormality determination with high accuracy in consideration of a pattern of time-series data.

### Brief Description of Drawings

FIG. 1 is a block diagram illustrating a schematic configuration of an abnormality determination model generating device and an abnormality determination device according to an embodiment of the present invention.
FIG. 2 is a flowchart illustrating a flow of a trigger condition determination model generating method according to the embodiment of the invention.
FIG. 3 is a diagram schematically illustrating the content of a time-series signal clipping step of the trigger condition determination model generating method according to the embodiment of the invention.
FIG. 4 is a diagram schematically illustrating the content of the time-series signal clipping step of the trigger condition determination model generating method according to the embodiment of the invention.
FIG. 5 is a diagram schematically illustrating the content of the trigger condition determination model generating step of the trigger condition determination model generating method according to the embodiment of the invention.
FIG. 6 is a diagram schematically illustrating a decision tree generated in the trigger condition determination model generating step of the trigger condition determination model generating method according to the embodiment of the invention.
FIG. 7 is a diagram schematically illustrating a state in which a one-pulse signal is converted into a sawtooth wave in the trigger condition determination model generating step of a trigger condition determining method for a time-series signal according to the embodiment of the invention.
FIG. 8 is a diagram schematically illustrating a sawtooth wave converted in the trigger condition determination model generating step of the trigger condition determining method for the time-series signal according to the embodiment of the invention.
FIG. 9 is a flowchart illustrating a flow of an abnormality determination model generating method according to the embodiment of the invention.
FIG. 10 is a diagram schematically illustrating the content of an abnormality determination model generating step of the abnormality determination model generating method according to the embodiment of the invention.
FIG. 11 is an explanatory diagram for explaining a first abnormality determination model in the abnormality determination model generating method according to the embodiment of the invention.
FIG. 12 is an explanatory diagram for explaining a second abnormality determination model in the abnormality determination model generating method according to the embodiment of the invention.
FIG. 13 is an explanatory diagram for explaining a third abnormality determination model in the abnormality determination model generating method according to the embodiment of the invention.
FIG. 14 is a flowchart illustrating a flow of an abnormality determination method according to the embodiment of the invention.

### Description of Embodiments

An abnormality determination model generating device, an abnormality determination device, an abnormality determination model generating method, and an abnormality determination method according to embodiments of the invention will be described with reference to the drawings.

### (Abnormality Determination Device)

Abnormality determination devices are for determining (diagnosing) an abnormality of a monitoring target facility (hereinafter, it may be simply referred to as a "facility") in, for example, a production facility such as a factory and an experimental facility such as a laboratory. Examples of the monitoring target facility include facilities of an iron-making process, production facilities of a manufacturing process of petroleum-related products, chemicals, and the like, and experimental facilities of research institutions.

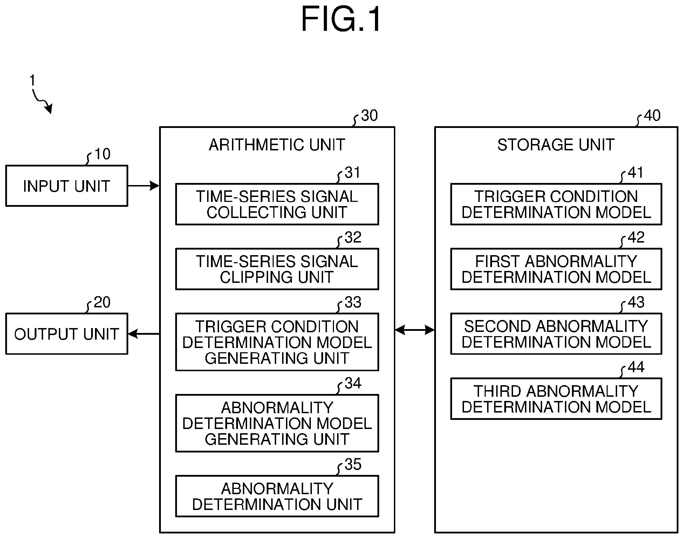

An abnormality determination device 1 is implemented by a general-purpose information processing device such as a personal computer or a workstation. As illustrated in FIG. 1, the abnormality determination device 1 includes an input unit 10, an output unit 20, an arithmetic unit 30, and a storage unit 40. Incidentally, an "abnormality determination model generating device" according to an embodiment is implemented by a configuration in which an abnormality determination unit 35 of the arithmetic unit 30 is excluded from the components of the abnormality determination device 1.

The input unit 10 is an input means of data to the arithmetic unit 30 and is implemented by, for example, a data collection device, a keyboard, a pointing device, or the like. The output unit 20 is an output means of data processed by the arithmetic unit 30, and is implemented by, for example, a display device such as a liquid crystal display.

The arithmetic unit 30 is implemented by, for example, a processor including a central processing unit (CPU) or the like and a memory (main storage unit) including a random access memory (RAM), a read only memory (ROM), or the like. The arithmetic unit 30 implements a function matching a predetermined purpose by loading a program into a work area of the main storage unit and executing the program and controlling each component or the like through the execution of the program.

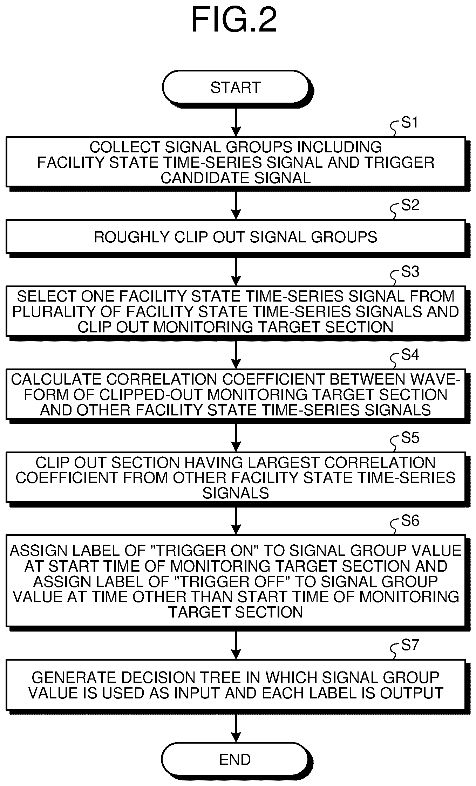

In addition, the arithmetic unit 30 functions as a time-series signal collecting unit 31, a time-series signal clipping unit 32, and a trigger condition determination model generating unit 33 through the execution of the program described above. The arithmetic unit 30 also functions as an abnormality determination model generating unit 34 and the abnormality determination unit 35. Note that details of each of the units will be described later (see FIGS. 2, 9, and 14) . Incidentally, an example is illustrated in FIG. 1 in which a single arithmetic unit 30 (≈ a single computer) implements the functions of the units, however, the functions of the units may be implemented by a plurality of arithmetic units.

The storage unit 40 is a means that stores a result of an operation by the arithmetic unit 30 and is implemented by, for example, a hard disk device or the like. The storage unit 40 stores a trigger condition determination model 41, a first abnormality determination model 42, a second abnormality determination model 43, and a third abnormality determination model 44. In addition to the above models, the storage unit 40 also stores, for example, data processed by the arithmetic unit 30 (such as a monitoring target signal, a trigger candidate signal, or a trigger condition) as necessary.

The trigger condition determination model 41 is a learning model used when a trigger condition is determined. As will be described later, the trigger condition determination model 41 is generated in advance by the trigger condition determination model generating unit 33 and stored in the storage unit 40.

Incidentally, the "trigger condition" indicates a condition for clipping a time-series signal when the abnormality determination models (the first abnormality determination model 42, the second abnormality determination model 43, and the third abnormality determination model 44) are generated in an abnormality determination model generating method to be described later. At the same time, the "trigger condition" indicates a condition for clipping a time-series signal when abnormality determination is performed in an abnormality determination method to be described later.

Specifically, the trigger condition indicates a condition for designating timing for clipping out a section as a target of abnormality determination (hereinafter, referred to as "monitoring target section") from a time-series signal (hereinafter, also referred to as an "facility state time-series signal") indicating an operation state of a facility. This trigger condition indicates, for example, clipping start time and a clipping width of the time-series signal. A time-series signal that determines a condition (trigger condition) for clipping the facility operation time-series signal from the monitoring target section is referred to as a "trigger candidate signal".

The facility operation time-series signal varies depending on the type of the monitoring target facility. For example in a case where the monitoring target facility is a "motor", the current, the speed, and others of the motor are used as the facility operation time-series signal. In the abnormality determination device 1, one or more facility state time-series signals and trigger candidate signals corresponding thereto are constantly collected. A trigger candidate signal indicates a time-series signal related to a monitoring target facility that is detected at the same time as a facility operation time-series signal.

Typically, a facility to be monitored starts operating when a single or multiple conditions are satisfied. A trigger candidate signal refers to this condition, and is, for example, a signal such as On or Off. If the trigger condition is known in advance, it is easy to clip out a monitoring target section. However, in a case where there are a large number of various facilities and complicated operation is performed, this trigger condition may not be easily determined. Alternatively, there are cases where a trigger candidate signal directly indicating the trigger condition is not necessarily captured in the database and there is only an indirect signal.

Therefore, a signal group defining a facility operation condition is selected as a trigger candidate signal, an operation start rule is extracted from a history of these signals by machine learning or the like, and a condition for clipping a monitoring target section is determined. In addition, the trigger candidate signal is desirably not directly related to an abnormality of a target process, facilities, or the like, and can be various command values, a signal indicating ON/OFF of a specific event, or the like. Note that the trigger candidate signal may include the monitoring target signal itself.

Meanwhile, the monitoring target section indicates a section to be clipped out for performing abnormality determination in the facility operation time-series signal. In a case where the monitoring target section is clipped out from the facility operation time-series signal, the time (hereinafter, referred to as "clipping start time") at which clipping out of the time-series signal is started and the clipping width are designated. At this point, the clipping start time is designated by the value of the trigger candidate signal collected simultaneously with the facility operation time-series signal. The width of the clipping varies depending on the type of the monitoring target facility. For example in a case where the monitoring target facility is a "motor", a section in which the motor accelerates may be designated as the width of clipping. Alternatively, in a case of a product manufacturing process, the width of a section from the start of manufacturing to the end of manufacturing can be set.

The first abnormality determination model 42, the second abnormality determination model 43, and the third abnormality determination model 44 are learning models used when abnormality determination is performed in the abnormality determination method to be described later. As will be described later, the first abnormality determination model 42, the second abnormality determination model 43, and the third abnormality determination model 44 are generated in advance by the abnormality determination model generating unit 34 and stored in the storage unit 40. Note that details of the first abnormality determination model 42, the second abnormality determination model 43, and the third abnormality determination model 44 will be described later.

### (Trigger Condition Determination Model Generating Method)

A generating method of the trigger condition determination model 41 according to the embodiment will be described with reference to FIGS. 2 to 8. In a trigger condition determination model generating method, a time-series signal collecting step (step S1), a time-series signal clipping step (steps S2 to S5), and a trigger condition determination model generating step (steps S6 and S7) are performed in the order mentioned. Incidentally, in the trigger condition determination model generating method, as will be described later, the time-series signal clipping step and the trigger condition determination model generating step are repeated, as necessary.

### <Time-Series Signal Collecting Step>

In the time-series signal collecting step, the time-series signal collecting unit 31 collects signal groups each including a facility state time-series signal and a trigger candidate signal (step S1). Note that a case where the time-series signal collecting unit 31 collects a plurality of time-series signals will be described here, however, the time-series signal collecting unit 31 may collect a single time-series signal.

### <Time-Series Signal Clipping Step>

In the time-series signal clipping step, the time-series signal clipping unit 32 clips out a monitoring target section of the facility operation time-series signal based on a predetermined criteria for the signal groups collected in the time-series signal collecting step. Hereinafter, details of the time-series signal clipping step will be described.

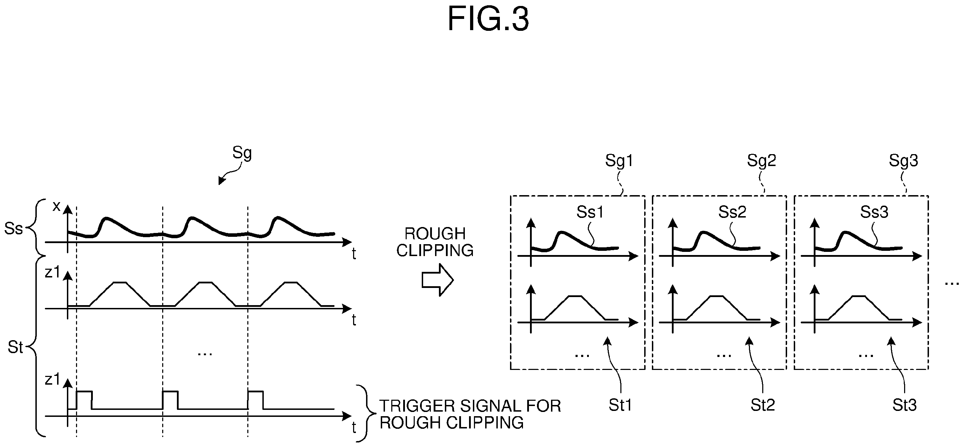

First, as illustrated in FIG. 3, the time-series signal clipping unit 32 roughly clips from the signal groups (step S2). For example, in a facility that performs a repeated operation such as a coil rolling facility, a facility state time-series signal and a trigger candidate signal are continuously acquired without any discontinuity for a coil that continuously flows. Therefore, in step S2, for example, signal groups are roughly clipped in order to divide facility state time-series signals and trigger candidate signals for each coil. Note that the rough clipping of the signal group may be performed at timing set in advance depending on the type of the monitoring target facility, or as illustrated in the drawing, a rough clipping signal may be selected from a plurality of trigger candidate signals and the rough clipping of the signal group may be performed at timing when the rough clipping signal rises.

In FIG. 3, a symbol Sg denotes a signal group before rough clipping, a symbol Ss denotes a facility state time-series signal before rough clipping, symbol St denotes a trigger candidate signal before rough clipping, and symbols Sg1, Sg2, and Sg3 denote signal groups after the rough clipping. In the drawing, symbols Ss1, Ss2, and Ss3 denote facility state time-series signals after the rough clipping, and symbols St1, St2, and St3 denote trigger candidate signals after the rough clipping.

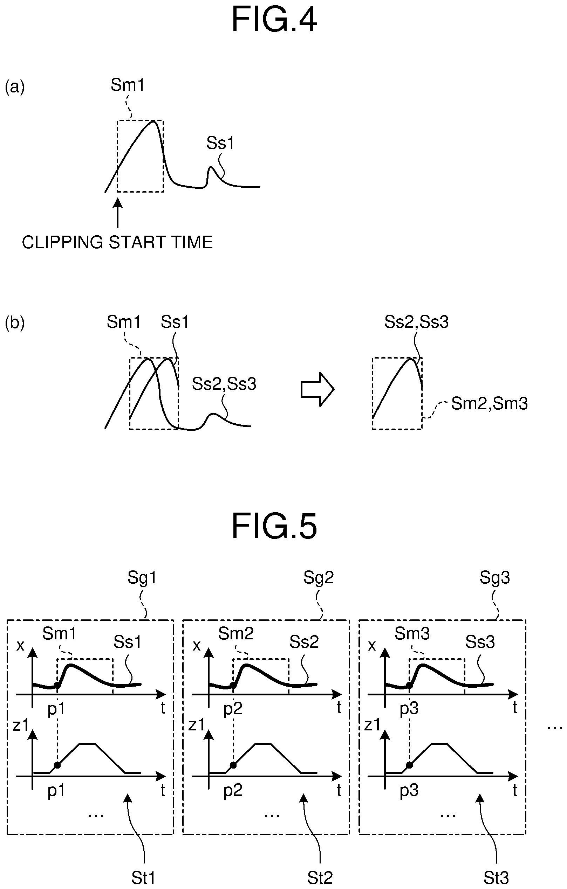

Next, as illustrated in FIG. 4(a), the time-series signal clipping unit 32 selects one facility state time-series signal (facility state time-series signal Ss1 in the drawing) from among the plurality of facility state time-series signals roughly clipped out in step S2. Then, a monitoring target section Sm1 of the selected facility state time-series signal Ss1 is clipped out (step S3). The clipping condition for clipping out the monitoring target section Sm1 in step S3 is determined based on the facility characteristic of the monitoring target facility. For example, in a case where the monitoring target facility is a "motor" and the facility state time-series signal Ss1 is a "current value of the motor" and it is determined whether or not a degree of increase in the current value of the motor when the motor accelerates is normal, a section in which the motor accelerates is set as a monitoring target section Sm1 as illustrated in the drawing. That is, a time point at which the motor starts acceleration is designated as the clipping start time of the monitoring target section Sm1, and a section from the start of acceleration to the end of acceleration is designated as the clipping width.

Next, the time-series signal clipping unit 32 calculates a correlation coefficient between the waveform included in the monitoring target section Sm1 clipped out in step S3 and a waveform included in the other facility state time-series signals Ss2 and Ss3 (step S4). Next, as illustrated in FIG. 4(b), the time-series signal clipping unit 32 searches for a section having the largest correlation coefficient with the waveform included in the monitoring target section Sm1 clipped in step S3 for the other facility state time-series signals Ss2 and Ss3. As a result, the monitoring target sections Sm2 and Sm3 of the facility state time-series signals Ss2 and Ss3, respectively, are clipped out (step S5).

As described above, in steps S4 and S5, a waveform similar to the waveform included in the monitoring target section Sm1 clipped out in step S3 is searched for from the waveforms included in the facility state time-series signals at other times roughly clipped out in step S2. Note that, as a method for searching for a similar waveform, a Euclidean distance, or the like between pieces of data of time-series signals in addition to comparing the correlation coefficients as described above.

### <Trigger Condition Determination Model Generating Step>

In the trigger condition determination model generating step, the start time of a monitoring target section to be clipped out is specified in advance for each signal group (a plurality of facility state time-series signals). Then, label data in which labels at the start times are set to ON and the other times are set to OFF is generated, and a learning model in which each value of one or more trigger candidate signals at each time is used as input and label data at each time is output is generated by machine learning.

In the trigger condition determination model generating step, first, as illustrated in FIG. 5, the trigger condition determination model generating unit 33 performs the following processing on each signal group. That is, a label of "trigger ON" is assigned to the values of the facility state time-series signals Ss1, Ss2, and Ss3 and the values of the trigger candidate signals St1, St2, and St3 corresponding to start times p1, p2, and p3 of the monitoring target sections Sm1, Sm2, and Sm3 that have been clipped out. In addition, a label of "trigger OFF" is assigned to the values of the facility state time-series signals Ss1, Ss2, and Ss3 and the values of the trigger candidate signals St1, St2, and St3 corresponding to the times other than the start times of the clipped out monitoring target sections Sm1, Sm2, and Sm3 (step S6). Note that the values of the facility state time-series signals Ss1, Ss2, and Ss3 and the values of the trigger candidate signals St1, St2, and St3 are hereinafter referred to as "signal group values". In addition, the label of "trigger ON" indicates that a signal group value to which this label is assigned is a clipping start time, and the label of "trigger OFF" indicates that a signal group value to which this label is assigned is not a clipping start time.

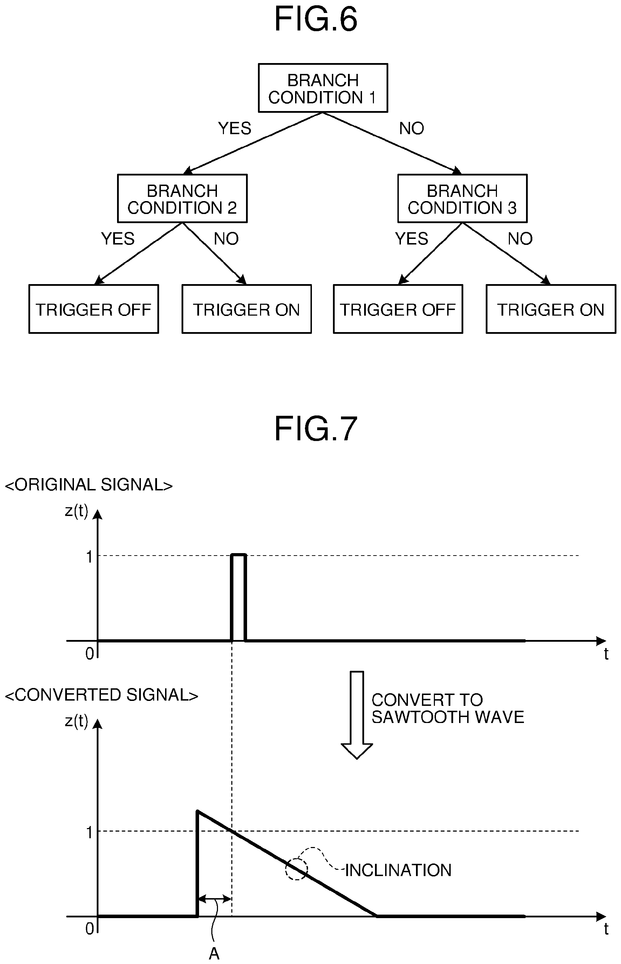

Next, the trigger condition determination model generating unit 33 performs machine learning by using the signal group values labeled as "trigger ON" and the signal group values labeled as "trigger OFF" as input and the label of "trigger ON" and the label of "trigger OFF" as output. As a result, as illustrated in FIG. 6, a decision tree is generated (step S7).

Specifically, the decision tree can be generated using learning data in which the objective variable is set to the labels of "trigger ON" and "trigger OFF" and the value of a trigger candidate signal corresponding to each time of "trigger ON" or "trigger OFF" is set to the response variable. At this point, it may be regarded as a function with the "trigger ON" set to "1" and the "trigger OFF" set to "0". In addition, various machine learning models other than the decision tree can be used. Therefore, the learning model generated in step S7 is not limited to the decision tree and may be, for example, a random forest, a neural network, or the like. At this point, it may be regarded as a function with the "trigger ON" set to "1" and the "trigger OFF" set to "0".

Here, in the trigger condition determination model generating step, in a case where the trigger candidate signal included in the signal group is a one-pulse signal, machine learning is performed after the trigger candidate signal is converted into a sawtooth wave as illustrated in the lower graph of FIG. 7. Note that the "one-pulse signal" indicates a signal that is turned ON only for one scan of rising or falling of the signal among the ON-OFF signals as illustrated in the upper graph of the drawing.

As illustrated in the upper graph of FIG. 7, the one-pulse signal is turned ON only for a short time. Therefore, in the time-series signal clipping step, when a portion having high similarity in the waveform is searched for, there are cases where the time of "trigger ON" shifts before or after the time when the one-pulse signal is turned ON although the one-pulse signal should also be turned ON at the time of "trigger ON". On the other hand, as illustrated in the drawing, by converting a one-pulse signal into a sawtooth wave, it is possible to eliminate a problem due to a delay of ON/OFF of the one-pulse signal.

The inclination of the sawtooth wave after conversion is determined by, for example, how many seconds after the one-pulse signal is turned ON are to be checked and is set to an inclination that does not overlap with the rise of a next signal. In addition, when a one-pulse signal is converted into a sawtooth wave, it is desirable to provide a margin (for example, about five scans) for starting the clipping of a monitoring target section before the one-pulse signal is turned ON due to a shift of the clipping start point as illustrated in A of FIG. 7.

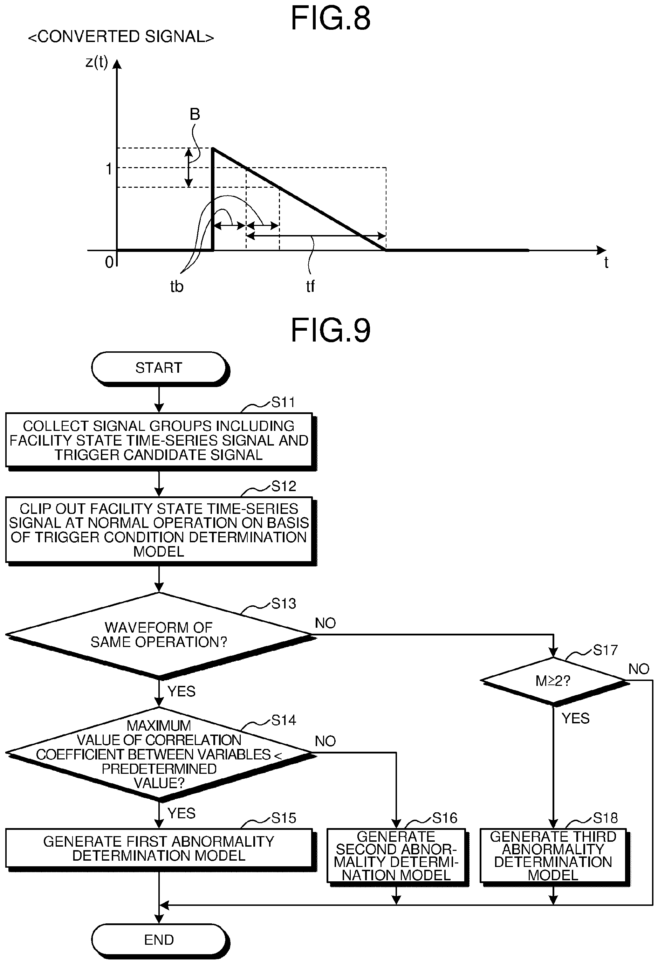

In addition, the shape of the sawtooth wave is defined by parameters tf and tb as illustrated in FIG. 8, however, the relationship between the parameters tf and tb is desirably set to tb < tf. In addition, in the sawtooth wave, as illustrated in the graph, in a case where a value z of the converted signal is within a range indicated by B, it is determined as trigger ON.

In the trigger condition determination model generating step, in cases such as where an error in which a trigger condition cannot be normally generated occurs during machine learning or a predetermined value for the determination accuracy cannot be obtained, the flow returns to the above-described time-series signal clipping step, and a monitoring target section that has been clipped our in a previous time is shifted back or forth. Then, after a monitoring target section of the facility state time-series signal is newly clipped out, the trigger condition determination model generating step is performed again. That is, after re-cutting the monitoring target section of the facility state time-series signal, the decision tree is constructed again. Then, in a case where the trigger condition can be normally generated at the time of machine learning, the trigger condition determination model generating step is ended, and in a case where the trigger condition cannot be normally generated, the flow returns to the time-series signal clipping step again, and the time-series signal clipping step and the trigger condition determination model generating step are performed again.

As illustrated in FIG. 4, the trigger condition determination model generating method according to the present embodiment is a method of learning the state of the trigger candidate signal at the start time of the monitoring target section (monitoring target section Sm1) initially designated in the time-series signal clipping step. Therefore, for example, in a case where there is no characteristic in the state of the trigger candidate signal at the start time of the monitoring target section designated first, learning cannot be performed well. Therefore, as described above, in a case where an error occurs in the trigger condition determination model generating step, it is possible to solve the problem at the time of learning by shifting back or forth the monitoring target section initially designated in the time-series signal clipping step and designating the monitoring target section again.

### (Abnormality Determination Model Generating Method)

A method of generating the abnormality determination model according to the embodiment (the first abnormality determination model 42, the second abnormality determination model 43, and the third abnormality determination model 44) will be described with reference to FIGS. 9 to 13. In the abnormality determination model generating method, the time-series signal collecting step (step S11), the time-series signal clipping step (step S12), and an abnormality determination model generating step (steps S13 to S18) are performed in the order mentioned.

### <Time-Series Signal Collecting Step>

In the time-series signal collecting step, the time-series signal collecting unit 31 collects signal groups each including a facility state time-series signal and a trigger candidate signal (step S11). Note that a case where the time-series signal collecting unit 31 collects a plurality of facility state time-series signals will be described here, however, the time-series signal collecting unit 31 may collect a single facility state time-series signal.

### <Time-Series Signal Clipping Step>

In the time-series signal clipping step, the time-series signal clipping unit 32 clips out a monitoring target section of the facility state time-series signal during normal operation from the signal groups collected in the time-series signal collecting step (step S12). In the time-series signal clipping step, the time-series signal clipping unit 32 clips out a monitoring target section K times from one or more facility state time-series signals based on the trigger condition determination model 41 during normal operation of the facility. That is, the time-series signal clipping unit 32 inputs the facility state time-series signal and the trigger candidate signal during the normal operation to the decision tree, thereby determining the trigger condition from branch conditions of the decision tree and clipping out a monitoring target section based on the determined trigger condition.

### <Abnormality Determination Model Generating Step>

In the abnormality determination model generating step, the abnormality determination model generating unit 34 generates the abnormality determination model from the facility state time-series signal during normal operation clipped out in the time-series signal clipping step. In the abnormality determination model generating step, the number of clipped sections per one time is set to L for the facility state time-series signal during normal operation clipped out in the time-series signal clipping step, and an L-dimensional vector including L variables is configured.

Subsequently, the abnormality determination model generating unit 34 determines whether or not the facility state time-series signal has a waveform of a facility that performs the same operation (step 13). Here, the "facility that performs the same operation" means a facility which repeats predetermined operation and a plurality of pieces of time-series data obtained from which exhibits regularity for every unit of operation. However, the operation condition varies depending on the product or the like of the facility and may have a plurality of patterns.

It is obvious to a person in charge or the like of the facility whether or not the facility specifications of the facility state time-series signal perform the same operation. Therefore, it is also possible to distinguish whether or not the facility state time-series signal has a waveform of the same operation by assigning, in advance, a label (referred to as the "same operation waveform label") indicating that the facility state time-series signal has a waveform of the same operation to each facility state time-series signal of facilities that perform the same operation.

Alternatively, a waveform may be drawn in an overlapping manner for each operation, and the result may be displayed to determine whether or not the waveforms are of the same operation. Furthermore, whether or not the facility state time-series signal has a waveform of the same operation can be distinguished by, for example, assigning the "same operation waveform label" to the facility state time-series signal that has been determined to have a waveform of the same operation.

In addition, it is also possible to automatically determine a same operation waveform from the characteristics of the facility state time-series signal. In this case, for the data of the K L-dimensional vectors clipped out in the time-series signal clipping step, it is possible to calculate a variance value for K pieces of data of each of the elements of the vectors and to automatically determine that the same operation is not performed in a case where the minimum value of the variance exceeds a predetermined value. Any of the methods described above may be used to determine whether or not the facility state time-series signal have a waveform of the same operation.

If it is determined that the facility state time-series signal have a waveform of the same operation (Yes in step 13), the abnormality determination model generating unit 34 performs the following processing. That is, it is determined whether or not the maximum value of a correlation coefficient between variables is less than a predetermined value for K L-dimensional vectors in the L-dimensional variable space (step S14).

If it is determined that the maximum value of the correlation coefficient between variables is less than the predetermined value (Yes in step S14), the abnormality determination model generating unit 34 generates the first abnormality determination model 42 by calculating the average and the variance of the variables (step S15). This completes the present processing. On the other hand, if it is determined that the maximum value of the correlation coefficient between the variables is greater than or equal to the predetermined value (No in step S14), the abnormality determination model generating unit 34 generates the second abnormality determination model 43 by performing the principal component analysis and calculating a transformation coefficient of the principal component (step S16). This completes the present processing. Incidentally, the second abnormality determination model can be specifically exemplified by a calculation model of a statistic such as a Q statistic and T2 based on the principal component analysis.

If it is determined in step S13 that the facility state time-series signal does not have a waveform of the same operation (No in step 13), the abnormality determination model generating unit 34 determines whether or not the facility state time-series signal of the target facility has M types (M ≥ 2) (step S17).

If it is determined that the facility state time-series signal of the target facility has M types (M ≥ 2) (Yes in step S17), the abnormality determination model generating unit 34 configures an M-dimensional vector including M types of variables at the same time. Then, the third abnormality determination model 44 is generated by performing the principal component analysis on a plurality of M-dimensional vectors in an M-dimensional variable space and calculating the transformation coefficient of the principal component (step S18), and this processing is completed. On the other hand, if it is determined in step S17 that the facility state time-series signal of the target facility does not have M types (M ≥ 2), that is, if it is determined that the facility state time-series signal has one type (M = 1) (No in step S17), the processing is completed as it is since there is no model of interest.

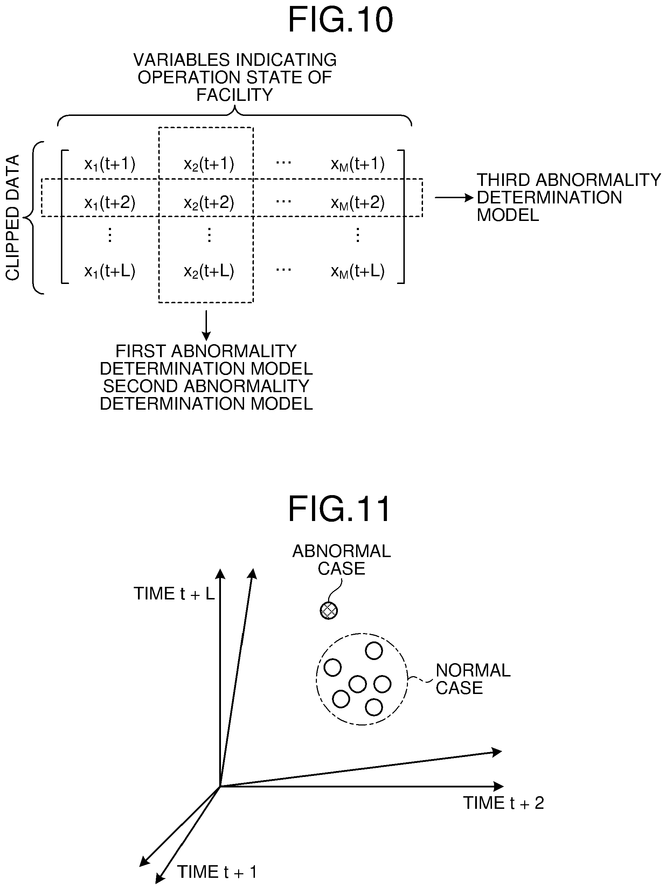

Here, for example, as illustrated in FIG. 10, in a case where a data set in which variables indicating the operation state of the facility are arranged in a column direction and time-series signals for each facility are arranged in a row direction is assumed as the facility state time-series signal, each abnormality determination model is generated as follows. That is, the first abnormality determination model 42 and the second abnormality determination model 43 are generated by extracting data in the vertical direction from the data set, and the third abnormality determination model 44 is generated by extracting data in the horizontal direction from the data set.

The first abnormality determination model 42 and the second abnormality determination model 43 are abnormality determination models generated in a case where the time-series signal of the L-dimensional vector clipped out by the time-series signal clipping unit 32 consists of signals indicating the same operation. In addition, the third abnormality determination model 44 is an abnormality determination model generated in a case where the time-series signal of the L-dimensional vector clipped out by the time-series signal clipping unit 32 does not consist of signals indicating the same operation and has two or more types (M types) of signals.

In addition, when variables acquired by clipping out L pieces of facility state time-series signal are plotted in the L-dimensional space, the variables can be illustrated as in FIGS. 11 to 13. In a case where the facility state time-series signal does not have M types (M ≥ 2) and the maximum value of the correlation coefficient between the variables is less than the predetermined value, as illustrated in FIG. 11, variables obtained during the normal operation are distributed in a spherical shape, and variables obtained during abnormal operation deviate from the spherical distribution. In this case, as described later, the abnormality determination of the facility is performed by the first abnormality determination model 42.

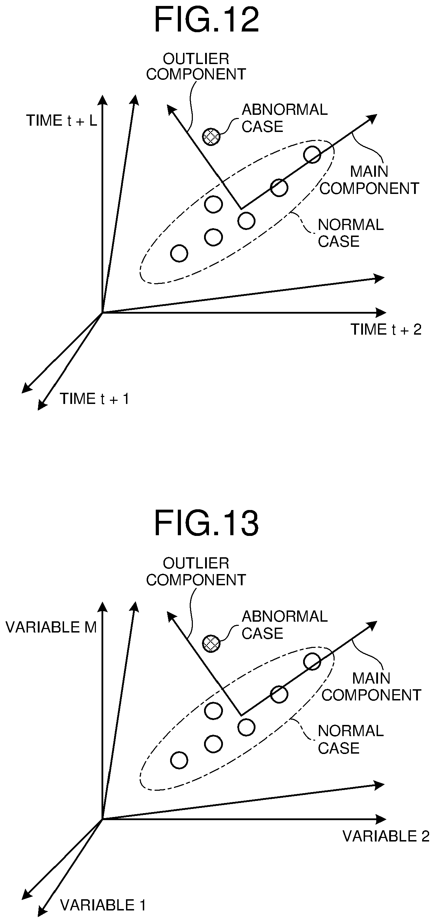

In addition, in a case where the facility state time-series signal does not have M types (M ≥ 2) and the maximum value of the correlation coefficient between the variables is greater than or equal to the predetermined value, as illustrated in FIG. 12, variables obtained during the normal operation are distributed in an elliptical shape, and variables obtained during abnormal operation deviate from the spherical distribution. In this case, as described later, the abnormality determination of the facility is performed by the second abnormality determination model 43.

Furthermore, in a case where the facility state time-series signal has M types (M ≥ 2), as illustrated in FIG. 13, variables obtained during the normal operation are distributed in an elliptical shape, and variables obtained during abnormal operation deviate from the spherical distribution. In this case, as described later, the abnormality determination of the facility is performed by the third abnormality determination model 44.

### (Abnormality Determination Method)

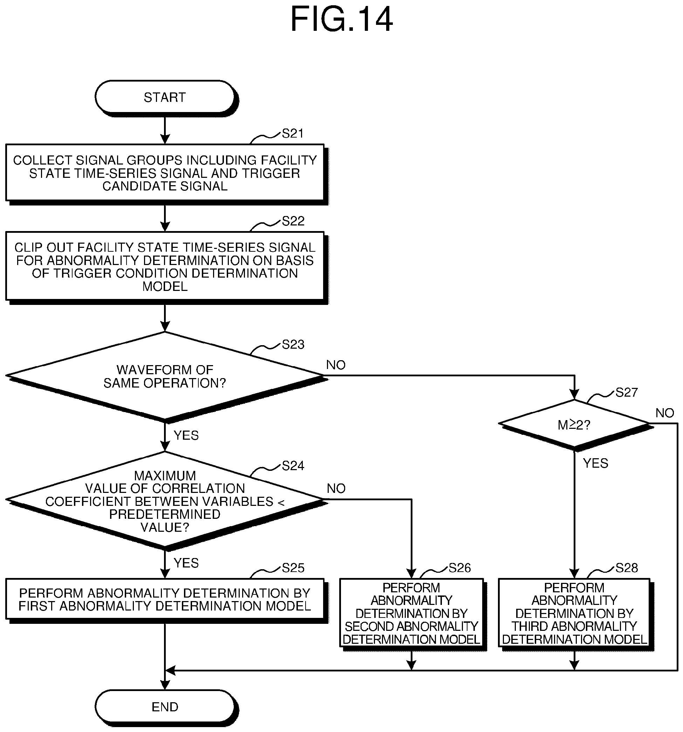

The abnormality determination method according to the embodiment will be described with reference to FIG. 14. In the abnormality determination method, the time-series signal collecting step (step S21), the time-series signal clipping step (step S22), and an abnormality determination step (steps S23 to S28) are performed in this order.

### <Time-Series Signal Collecting Step>

In the time-series signal collecting step, the time-series signal collecting unit 31 collects signal groups each including a facility state time-series signal and a trigger candidate signal (step S21). Note that a case where the time-series signal collecting unit 31 collects a plurality of facility state time-series signals will be described here, however, the time-series signal collecting unit 31 may collect a single facility state time-series signal.

### <Time-Series Signal Clipping Step>

In the time-series signal clipping step, the time-series signal clipping unit 32 clips out a monitoring target section of the facility state time-series signal for abnormality determination from the signal groups collected in the time-series signal collecting step (step S22). In the time-series signal clipping step, the time-series signal clipping unit 32 clips out a monitoring target section from one or more facility state time-series signals based on the trigger condition determination model 41. That is, the time-series signal clipping unit 32 inputs the facility state time-series signal and the trigger candidate signal to the decision tree, thereby determining the trigger condition from branch conditions of the decision tree and clipping out a monitoring target section based on the determined trigger condition.

More specifically, the time-series signal clipping unit 32 inputs values of the trigger candidate signal at respective times to the trigger condition determination model 41. Then, for one or more facility state time-series signals, L pieces of data are clipped out in a predetermined period starting from a time point when the output of the trigger condition determination model 41 is turned ON, thereby clipping the facility state time-series signal for abnormality determination.

### <Abnormality Determination Step>

In the abnormality determination step, the abnormality determination unit 35 determines an abnormality of the facility from the facility state time-series signal for abnormality determination using any one of the first abnormality determination model 42, the second abnormality determination model 43, and the third abnormality determination model 44.

In the abnormality determination step, the abnormality determination unit 35 sets the number of clipped sections per one time is set to L for the facility state time-series signal for abnormality determination clipped out in the time-series signal clipping step, and an L-dimensional vector including L variables is configured.

Subsequently, the abnormality determination unit 35 determines whether or not the facility state time-series signal has a waveform of a facility that performs the same operation (step 23). Note that whether or not the waveform has the same operation can be determined by any of the methods described in the abnormality determination model generating step.

If it is determined that the facility state time-series signal has a waveform of the same operation (Yes in step 23), the abnormality determination unit 35 determines whether or not the maximum value of the correlation coefficient between variables is less than a predetermined value for K L-dimensional vectors in the L-dimensional variable space (step S24).

If it is determined that the maximum value of the correlation coefficient between the variables is less than the predetermined value (Yes in step S24), the abnormality determination unit 35 performs abnormality determination using the first abnormality determination model 42 (step S25) and completes the present processing. On the other hand, if it is determined that the maximum value of the correlation coefficient between the variables is greater than or equal to the predetermined value (No in step S24), the abnormality determination unit 35 performs abnormality determination using the second abnormality determination model 43 (step S26) and completes the present processing.

If it is determined in step S23 that the facility state time-series signal does not have a waveform of the same operation (No in step 23), the abnormality determination unit 35 determines whether or not the facility state time-series signal of the target facility has M types (M ≥ 2) (step S27).

If it is determined that the facility state time-series signal of the target facility has M types (M ≥ 2) (Yes in step S27), the abnormality determination unit 35 performs abnormality determination using the third abnormality determination model 44 (step S28) and completes the present processing. On the other hand, if it is determined in step S27 that the facility state time-series signal of the target facility does not have M types (M ≥ 2), that is, if it is determined that the facility state time-series signal has one type (M = 1) (No in step S17), there is no model of interest. Therefore, the processing is completed as it is without any further action.

Here, in the abnormality determination step, the abnormality determination unit 35 preferably determines the necessity of repair of the facility based on the number of times the facility is determined to be abnormal in a predetermined period. The number of times of abnormality determination that requires repair of the facility can be obtained experimentally or empirically.

According to the abnormality determination model generating device, the abnormality determination device 1, the abnormality determination model generating method, and the abnormality determination method according to the embodiment as described above, general application is possible without regard to the type or the like of the monitoring target. In addition, it is possible to perform highly accurate abnormality determination in consideration of the pattern of the time-series data.

That is, according to the abnormality determination device 1 and the abnormality determination method according to the embodiment, it is possible to perform general-purpose abnormality determination of the facility without regard to the type or characteristics of the facility. The abnormality determination by the abnormality determination device 1 and the abnormality determination method according to the embodiment is not limited to the facilities exemplified in the embodiment. The abnormality determination by the abnormality determination device 1 and the abnormality determination method according to the embodiment can be generally applied regardless of the type or the like of the facility as long as the facility repeats predetermined operation and a plurality of pieces of obtained time-series data indicate regularity in an operation unit thereof. Therefore, for example, it is not necessary to change parameters depending on the type, characteristics, or the like of the facility or to reset parameters depending on operating conditions or the like. This makes it possible to simplify abnormality determination in a large-scale plant having a large number of plant facilities such as a steel product manufacturing plant and to reduce the manpower or the cost required for the abnormality determination.

Furthermore, for example for a facility from which a plurality of time-series signals can be obtained instead of a facility that repeats predetermined operation, abnormality determination from a change from a normal state can be performed by correlation monitoring between different signals. In the present embodiment, by using the same data structure, it is possible to perform abnormality determination from two different viewpoints of waveform similarity monitoring and correlation monitoring between different signals while maintaining versatility.

In addition, the abnormality determination model generating device, the abnormality determination device 1, the abnormality determination model generating method, and the abnormality determination method according to the embodiment have the following effects. By generating and using the trigger condition determination model 41 that has learned conditions under which the facility state time-series signal and the trigger candidate signal enter trigger ON, it is possible to automatically determine the trigger condition for clipping a monitoring target section from the facility state time-series signal. In addition, according to the abnormality determination model generating device, the abnormality determination device 1, the abnormality determination model generating method, and the abnormality determination method according to the embodiment, the trigger condition for clipping out a start target section of the facility state time-series signal can be automatically determined. Therefore, it is not necessary to manually examine and determine the trigger condition, which can simplify the preliminary preparation required for abnormality determination of the facility.

The abnormality determination model generating device, the abnormality determination device, the abnormality determination model generating method, and the abnormality determination method according to the present invention have been specifically described with reference to the embodiments and examples for carrying out the invention. However, the gist of the present invention is not limited to the description and should be broadly interpreted based on the description of the claims. It goes without saying that various modifications, variations, and the like based on the description are also included in the gist of the present invention.

### Reference Signs List

- 1: ABNORMALITY DETERMINATION DEVICE
- 10: INPUT UNIT
- 20: OUTPUT UNIT
- 30: ARITHMETIC UNIT
- 31: TIME-SERIES SIGNAL COLLECTING UNIT
- 32: TIME-SERIES SIGNAL CLIPPING UNIT
- 33: TRIGGER CONDITION DETERMINATION MODEL GENERATING UNIT
- 34: ABNORMALITY DETERMINATION MODEL GENERATING UNIT
- 35: ABNORMALITY DETERMINATION UNIT
- 40: STORAGE UNIT
- 41: TRIGGER CONDITION DETERMINATION MODEL
- 42: FIRST ABNORMALITY DETERMINATION MODEL
- 43: SECOND ABNORMALITY DETERMINATION MODEL
- 44: THIRD ABNORMALITY DETERMINATION MODEL

## Claims

1. An abnormality determination model generating device for generating an abnormality determination model for determining an abnormality of a facility performing a predetermined operation, the abnormality determination model generating device comprising:
a time-series signal clipping unit configured to clip K times from one or more time-series signals indicating an operation state of the facility during normal operation of the facility; and
an abnormality determination model generating unit configured to generate the abnormality determination model from the time-series signals during the normal operation clipped out by the time-series signal clipping unit,
wherein the abnormality determination model generating unit is configured to:
clip L items per one time of clipping from the time-series signals during the normal operation clipped by the time-series signal clipping unit and configures an L-dimensional vector including L variables;
generate a first abnormality determination model by calculating an average and a variance of each of the variables in a case where a maximum value of a correlation between variables is less than a predetermined value for K L-dimensional vectors in an L-dimensional variable space;
generate a second abnormality determination model by performing principal component analysis and calculating a transformation coefficient of a principal component in a case where the maximum value of the correlation between the variables is greater than or equal to a predetermined value for the K L-dimensional vectors in the L-dimensional variable space; and
configure an M-dimensional vector including M types of variables at a same time and generate a third abnormality determination model by performing principal component analysis on a plurality of M-dimensional vectors in an M-dimensional variable space and calculating a transformation coefficient of a principal component in a case where the time-series signal during the normal operation clipped out by the time-series signal clipping unit has M types (M ≥ 2).

2. The abnormality determination model generating device according to claim 1,
wherein the first abnormality determination model and the second abnormality determination model are abnormality determination models generated in a case where a time-series signal of the L-dimensional vector clipped out by the time-series signal clipping unit consists of signals indicating same operation, and
the third abnormality determination model is an abnormality determination model generated in a case where the time-series signal of the L-dimensional vector clipped out by the time-series signal clipping unit does not consist of signals indicating same operation and there are two or more types (M types) of signals.

3. The abnormality determination model generating device according to claim 1 or 2, further comprising:
a time-series signal collecting unit configured to collect a time-series signal indicating an operation state of the facility and a time-series signal as a trigger candidate for determining a condition for clipping the time-series signal indicating the operation state from a predetermined monitoring target section; and
a trigger condition determination model generating unit configured to
identify in advance a start time of the monitoring target section to be clipped out with respect to the time-series signal indicating the operation state of the facility,
generate label data for turning on a label of the start time and turning off at other times, and
generate a trigger condition determination model by machine learning, the trigger condition determination model using each value of one or more of the time-series signal as the trigger candidate at each time as input and the label data at each time as output, and
wherein the time-series signal clipping unit is configured to clip K times from the one or more of the time-series signal indicating the operation state of the facility based on the trigger condition determination model during normal operation of the facility.

4. The abnormality determination model generating device according to claim 3, wherein the trigger condition determination model is a machine learning model including a decision tree.

5. An abnormality determination device for determining an abnormality of a facility performing a predetermined operation, the abnormality determination device comprising:
a time-series signal clipping unit configured to clip out a time-series signal for abnormality determination from one or more time-series signals indicating an operation state of the facility; and
an abnormality determination unit configured to determine an abnormality of the facility from the time-series signal for the abnormality determination using any one of the first abnormality determination model, the second abnormality determination model, and the third abnormality determination model generated by the abnormality determination model generating device according to any one of claims 1 to 4.

6. An abnormality determination device for determining an abnormality of a facility performing a predetermined operation, the abnormality determination device comprising:
a time-series signal collecting unit configured to collect a time-series signal indicating an operation state of the facility and a time-series signal as a trigger candidate for determining a condition for clipping the time-series signal indicating the operation state from a predetermined monitoring target section;
a time-series signal clipping unit configured to clip a time-series signal for abnormality determination by inputting a value of each time of the time-series signal as the trigger candidate to the trigger condition determination model generated by the abnormality determination model generating device according to claim 3 or 4 and clipping out L pieces of data for one or more of the time-series signal indicating the operation state of the facility in a predetermined period starting from a time point when output of the trigger determination model is turned on; and
an abnormality determination unit configured to determine an abnormality of the facility from the time-series signal for the abnormality determination using any one of the first abnormality determination model, the second abnormality determination model, and the third abnormality determination model generated by the abnormality determination model generating device according to claim 3 or 4.

7. The abnormality determination device according to claim 5 or 6, wherein the abnormality determination unit is configured to determine necessity of repair of the facility based on number of times the facility has been determined to be abnormal in a predetermined period.

8. An abnormality determination model generating method for generating an abnormality determination model for determining an abnormality of a facility performing a predetermined operation, the abnormality determination model generating method comprising:
a time-series signal clipping step of clipping K times from one or more time-series signals indicating an operation state of the facility during normal operation of the facility; and
an abnormality determination model generating step of generating the abnormality determination model from the time-series signals during the normal operation clipped out in the time-series signal clipping step,
wherein the abnormality determination model generating step includes:
clipping L items per one time of clipping from the time-series signals during the normal operation clipped in the time-series signal clipping step and configuring an L-dimensional vector including L variables;
generating a first abnormality determination model by calculating an average and a variance of each of the variables in a case where a maximum value of a correlation between variables is less than a predetermined value for K L-dimensional vectors in an L-dimensional variable space;
generating a second abnormality determination model by performing principal component analysis and calculating a transformation coefficient of a principal component in a case where the maximum value of the correlation between the variables is greater than or equal to a predetermined value for the K L-dimensional vectors in the L-dimensional variable space; and
configuring an M-dimensional vector including M types of variables at a same time and generating a third abnormality determination model by performing principal component analysis on a plurality of M-dimensional vectors in an M-dimensional variable space and calculating a transformation coefficient of a principal component in a case where the time-series signal during the normal operation clipped out by the time-series signal clipping unit has M types (M ≥ 2).

9. The abnormality determination model generating method according to claim 8,
wherein the first abnormality determination model and the second abnormality determination model are abnormality determination models generated in a case where a time-series signal of the L-dimensional vector clipped out in the time-series signal clipping step consists of signals indicating same operation, and
the third abnormality determination model is an abnormality determination model generated in a case where the time-series signal of the L-dimensional vector clipped out in the time-series signal clipping step does not consist of signals indicating same operation and there are two or more types (M types) of signals.

10. An abnormality determination method for determining an abnormality of a facility that performs predetermined operation, the abnormality determination method comprising:
a time-series signal clipping step of clipping out a time-series signal for abnormality determination from one or more time-series signals indicating an operation state of the facility; and
an abnormality determination step of determining an abnormality of the facility from the time-series signal for the abnormality determination using any one of the first abnormality determination model, the second abnormality determination model, and the third abnormality determination model generated by the abnormality determination model generating method according to claim 8.
